# EUROPEAN PATENT SPECIFICATION

(11) **EP 3 509 005 B1**
(45) Date of publication and mention of the grant of the patent: **18.10.2023**
(21) Application number: 17845182.9
(22) Date of filing: 10.08.2017
(51) Int. Cl.: H04L 9/40, G06F 21/44, G06F 21/62

(54) **METHOD AND SYSTEM FOR GRANTING AUTHORITY TO ACQUIRE TERMINAL ATTACK ALARM INFORMATION LOG**
VERFAHREN UND SYSTEM ZUR ERTEILUNG EINER BERECHTIGUNG ZUR ERFASSUNG EINES INFORMATIONSPROTOKOLL EINES ENDGERÄTEANGRIFFSALARMS
PROCÉDÉ ET SYSTÈME PERMETTANT D'ACCORDER UNE AUTORISATION D'ACQUISITION D'UN JOURNAL D'INFORMATIONS D'ALARME D'ATTAQUE DE TERMINAL

(30) Priority: 30.08.2016 CN 201610768537
(43) Date of publication of application: 10.07.2019
(73) Proprietor: Ingenico (Fujian) Technology Co., Ltd., Fujian 350001 (CN)
(72) Inventor: CHEN, Feifei, Fujian 350001 (CN); LIN, Hui, Fujian 350001 (CN)
(74) Representative: LLR
(86) International application number: PCT/CN2017/096826
(87) International publication number: WO 2018/040880

(56) References cited:
- CN-A- 102 013 141
- CN-A- 102 271 042
- CN-A- 103 944 728
- CN-A- 106 372 531
- US-A1- 2006 133 615
- US-A1- 2006 294 378
- US-A1- 2012 131 343
- US-A1- 2015 113 618

## Description

### Technical Field

This invention involves the communication technology field, especially a method and system for authorization to get the terminal attack alarm information log.

### Background of Invention

In the field of financial payment, in order to guarantee the safety of the terminal equipment, after suffering any attack, the terminal equipment will enter into the attack state, continuously display the attack alarm alert, and cannot make the normal payment transaction. In order to analyze the reasons for the alarm, it is necessary to get the log of the attack alarm information from the terminal. However, the attack alarm information belongs to sensitive data, and the safety of the terminal equipment will face major threat if such information is randomly obtained and analyzed.

Patent document US2012/131343A1 discloses a server, a device accessing the server and a control method thereof, the server for single sign on including: a storage unit which stores user information of a second device; and a controller which identifies a second device which is accessed by a same user as a user of a first device and which stores account information, if the first device requests the account information for a content provider.

Patent document US2015/113618A1 describes a method related to using an attestation service to verify a secure server. The secure server may receive a signed trusted credential from an attestation service validating the secure server as trustworthy to a client device seeking access. The secure server may protect the signed trusted credential in a server secure module.

Patent document US2006/133615A1 describes an improved data processing system and, in particular, a method and apparatus for data storage protection using cryptography.

### Summary of Invention

For this purpose, it is necessary to provide a method for authorization to get the terminal attack alarm information, so as to settle the problem that the cause of attack alarm can't be known and the attack alarm information of the terminal equipment is randomly and maliciously stolen and analyzed after the terminal equipment is under attack.

In order to achieve the above object, the inventor provides a method according to independent claim 1 and a system according to independent claim 6.

An example method for authorization to get terminal attack alarm information log, which is featured as below is provided:
authentication account and judge whether the said authentication account has the authority to get the attack alarm information;
If yes, the server will send the first data to be authenticated to the client tool, and the said client tool will get the operator certificate from U-KEY. The said U-KEY includes the operator private key;
The client tool will use the said operator private key to encrypt the first data to be authenticated, and generate the first authentication data. The client tool will send the said operator certificate and said first authorization data to the server;
The server will authenticate the first authentication data;
If they pass the authentication, the terminal will send the second data to be authenticated to the client tool, and the client tool will send the said second data to be authenticated to the server;
The server will receive the said second data to be authenticated, and authenticate the said second data to be authenticated. If they pass the authentication, the server will send the first private key to encrypt the said second data to be authenticated, generate the second authentication data, and then send the said second authentication data to the terminal;
The terminal will use the first public key to authenticate the said second authentication data. If they pass the authentication, the said client tool will send the instructions to the terminal and the terminal will receive the said instructions. The terminal will use the second public key to encrypt the attack alarm information log and send the said attack alarm information log to the said client tool;
The said client tool will receive the said attack alarm information log, and the said client tool will use the second private key to encrypt the said attack alarm information log and get the clear information of the said attack alarm information log.

Further, the server includes the following steps before getting the authentication account:
The server will generate the first public-private key pair and the second public-private key pair. The said first public-private key pair includes the first public key and the first private key, and the second public-private key pair includes the second public key and the second private key. The server will store the first private key, send the said first public key and the said second public key to the terminal, and send the said second private key to U-KEY;
The terminal will receive the said first public key and the said second public key.

Further,, the terminal will authenticate the second authentication data, and includes the following steps:
The terminal will use the said first public key to encrypt the second authentication data, get the clear information of the data to be authenticated in the said authentication data, and compare whether the clear information of the data to be authenticated in the second authentication data and the said second data to be authenticated are consistent. If yes, they will pass the authentication.

Further, the terminal will encrypt the attack alarm information log, the said client tool will make decryption on the said attack alarm information log,and the following steps are included:
The said client tool will get the said second private key from U-KEY;
The terminal will use the said second public key to encrypt the attack alarm information log, and send the said attack alarm information logo to the said client tool;
The said client tool will receive the said attack alarm information log, use the said second private key to make decryption on the said attack alarm information log, and get the clear information of the said attack alarm information log.

Further, The server will authenticate the first authentication data, and the following steps are included:
The server will receive the said operator certificate, extract the public key in the said operator certificate, use the said public key to make decryption on the said first authentication data, get the clear information to be authenticated in the said first authentication data, and compare whether the clear information of the data to be authenticated in the first authentication data and the said first data to be authenticated are consistent. If yes, they will pass the authentication.

A system for authorization to get terminal attack alarm information log, the said server is used to get the authentication account and judge whether the said authentication account has the authority to get the attack alarm information log. If yes, the server will send the first data to be authenticated to the client tool;
The said server tool is used to get the operator certificate from U-KEY. The said U-KEY includes the operator private key, and the said operator private key is used to make encryption on the said first data to be authenticated and generate the first authentication data. The client tool will send the said operator certificate and the said first authentication data to the server;
The said server is also used for authenticating the first authentication data;
If they pass the authentication, the said terminal will be used to send the second data to be authenticated to the client tool;
The said client tool is also used for sending the said second data to be authenticated to the server;
The said server is also used for receiving the said second data to be authenticated and authenticating the said second data to be authenticated. If they pass the authentication, the server will use the first private key to make encryption on the second data to be authenticated, generate the second authentication data and send the said second authentication data to the terminal;
The said terminal is also used for using the first public key to authenticate the said second authentication data;
If they pass the authentication, the said client tool will also be used for sending the instructions to the terminal;
The said terminal is also used for receiving the said instructions, using the second public key to make encryption on the attack alarm information log, and sending the said attack alarm information log to the said client tool;
The said client tool is also used for receiving the said attack alarm information log, using the second private key to make decryption on the said attack alarm information log, and getting the clear information of the said attack alarm information log.

Further, the said server is also used for generating the first public-private key pair and the second public-private key pair before obtaining the authentication account. The said first public-private key pair includes the first public key and the first private key, and the said second public-private key pair includes the second public key and the second private key. The server will store the first private key, send the said first public key and the said second public key to the terminal, and send the said second private key to U-KEY;
The said terminal is also used for receiving the said first public key and the said second public key.

Further, The said terminal is also used for using the said first public key to make decryption on the said second authentication data, getting the clear information of the data to be authenticated in the said second authentication data, comparing whether the clear information of the data to be authenticated in the second authentication data and the said second data to be authenticated are consistent. If yes, they will pass the authentication.

Further, the said client tool is also used for getting the said private key from U-KEY;
The said terminal is also used for using the said second public key to make encryption on the attack alarm information log, and sending the said attack alarm information log to the said client tool;
The said client tool is also used for receiving the said attack alarm information log, using the said second private key to make decryption on the said attack alarm information log, and getting the clear information of the said attack alarm information log.

Further, the said client is also used for receiving the said operator certificate, extracting the public key in the said operator certificate, using the said public key to make decryption on the said first authentication data, getting the clear information of the data to be authenticated in the said first authentication data, and comparing whether the clear information of the data to be authenticated in the first authentication data and the said first data to be authenticated are consistent. If yes, they will pass the authentication.

The beneficial effect of this invention is that, the maintenance personnel will go through the login authentication by using the account, and the server will judge whether this account has the authority to get the terminal attack alarm information log. If it has the authority to get the terminal attack alarm information log, the U-KEY used by the operator will be used, and the server will authenticate the validity of this U-KEY. If the U-KEY is valid after authentication, the server will get the second data to be authenticated from the terminal and generate the second authentication data. After passing the second authentication data, the terminal can get the attack alarm information log from the terminal. The two-factor authentication will be carried out during this whole process and thus the safety will be guaranteed. In addition, the instruction of getting the attack alarm information log from the terminal will be a lawful act recognized by the server, which guarantees that the operation to get the attack alarm information log is valid. The attack alarm information log got will be encrypted and can be decrypted only with the specific private key, which further enhances the safety and confidentiality of the attack alarm information log.

### Brief Description of Figures

Figure 1 is the flow chart of this invention concerning a method for authorization to get the terminal attack alarm information log;
Figure 2 is the module chart of this invention concerning a system for authorization to get the terminal attack alarm information log.

Description of figure signs:
10. Server;
20. Terminal;
30. Client Tool;
40. U-KEY;
401. Operator Certificate;
402. Operator Private Key.

### Detailed Description of Embodiments

In order to explain the technical contents, structural features and the purposes and effects realized for the technical scheme in detail, the specific embodiments and the matched figures are given as follows.

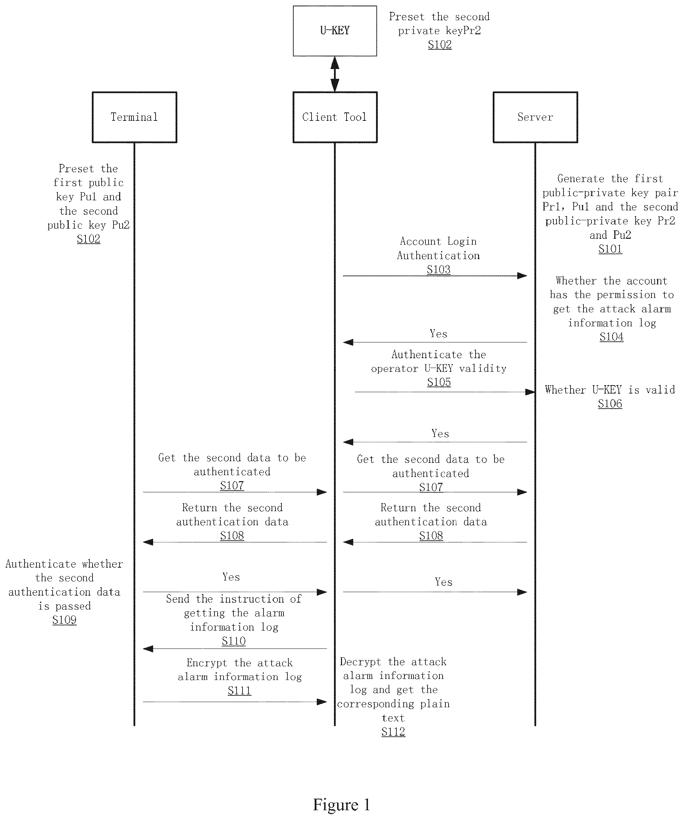

Please refer to Figure 1. In this embodiment, U-KEY is inserted on the client tool. In this embodiment, the client tool is PC, and U-KEY stores the operator certificate and operator private key. When U-KEY is inserted on the client tool, the interactive software is installed on the client tool. The client tool can get the operator certificate and directly use the operator private key from U-KEY. Secondly, in this embodiment, the specific APP is installed on PC. In the APP login interface, the maintenance personnel must input the account and password to log into the system; if the maintenance personnel log into the system through account and password, the server will judge the authority of the account and password, so as to guarantee the validity of the account.

In other embodiments, the specific website may be input directly through the browser, and meanwhile the maintenance personnel must also input the account and password to log into the system.

The specific steps are as below: In step S101, the first public-private key pair Pr1 and Pu1 and the second public-private key pair Pr2 and Pu2 will be generated. Firstly, we must ensure that the terminal, server and the client tool are connected to the Internet. After that, the server will generate the first public-private key pair Pr1 and Pu1 and the second public-private key pair Pr2 and Pu2, and send the said first public key Pu1 and the second public key Pu2 to the terminal, namely step S102: preset the first public key Pu1 and the second public key Pu2 on the terminal. Meanwhile, when the U-KEY is issued, the second private key Pr2will be stored into U-KEY from the server, and the client tool can get the second private key Pr2 from U-KEY through the installed interactive software, namely step S102: preset the second private key Pr2into U-KEY.

Presetting the first public key Pulin to the terminal is to enter into step S107 sever and get the second data to be authenticated from the terminal after passing the account authentication in step S103 and step S106 and the validity authentication of U-KEY. The server will judge the validity of the second data to be authenticated. If yes, the server will use the said first private key Pr1 to make encryption on the second data to be authenticated and generate the second authentication data. In Step S108, the server will return the said second authentication data to the terminal, and in Step S109, the terminal will authenticate whether the second authentication data are passed, namely the terminal can use the preset first public key Pul to make decryption on the second authentication data, get the clear information of the second authentication data, and compare whether the clear information of the said second authentication data are consistent with the second data to be authenticated. If yes, they will pass the authentication. After passing the authentication, the Step S110 will begin:the instruction for getting the alarm information log will be sent, which means that, the client tool will send the alarm information log to the terminal, and the terminal will receive the said instruction to get the alarm information log. In addition, in step S111, the attack alarm information log will be encrypted, which means that, the terminal will use the preset second public key Pu2 to make encryption on the attack alarm information log, so as to guarantee the safety of the attack alarm information log during transmission. After encryption, the terminal will send the attack alarm information log to the client tool. The client tool said in step S112 will make decryption on the attack alarm information log by using the preset second private key Pr2, so as to get the clear information.

During the whole process, firstly the server will judge whether the account of the maintenance personnel has the authority to get the attack alarm information log. If yes, then the server will judge the validity of U-KEY of the operator. The two-factor authentication of account and U-KEY greatly guarantees the safety of getting the instruction of attack alarm information log. In addition, getting the instruction of attack alarm information log from the terminal will be a lawful act recognized by the server, which guarantees the validity of the operation of getting the attack alarm information log. Furthermore, the attack alarm information log got is encrypted by the second public key, and can be decrypted only with the second private key, which further enhances the safety and confidentiality of the attack alarm information log and solves the problem that some lawbreakers may easily get the attack alarm information log.

Details of step S103 are as follows: account login authentication. In this embodiment, the specific APP is installed on the client tool, and in the APP login interface, the maintenance personnel must input the account and password to log into the system.

The server stores all legal accounts and passwords as well as the authority corresponding to such accounts. In Step S104, the server will judge whether there is the authority to get the attack alarm information log. This step is detailed as follows: The maintenance personnel will input the account and password, the server will get the account and password input by the maintenance personnel and judge whether this account and password are stored in the server. If yes, the maintenance personnel will successfully log into the system and meanwhile the server will further get the authority of this account and judge whether this account has the authority to get the attack alarm information log. The validity of the subsequent operations will be ensured through the authority authentication on the account and password from the server.

After authenticating that the account has the authority to get the attack alarm information log, the server will enter into step S105: authenticating the validity of the operator U-KEY. The step is detailed follows:
The client tool will get the first data to be authenticated; firstly, the server itself will generate the first data to be authenticated. In this embodiment, the first data to be authenticated are 16-digit random number. The client tool will get the first data to be authenticated from the server.

In other embodiments, the first data to be authenticated also may be a random number in other digits. It may be a combination of 32-digit letters, numbers and special signs. In this embodiment, it guarantees that the random number generated every time is different by generating a 16-digit random number every time.

The client tool will use U-KEY to generate the first authentication data; after receiving the first data to be authenticated, the client tool will use the operator private key stored in U-KEY to make encryption on the first data to be authenticated. After that, it will generate the first data to be authenticated. By using the operator private key stored in U-KEY to make encryption on the first data to be authenticated, it is ensured that, the first authentication data generated will neither be intercepted by other illegitimate U-KEYs during data transmission, and the truly legitimate U-KEY will not be imitated to trigger any safety problems.

After generating the first authentication data, the client tool will send the first authentication data and operator certificate to the server for authentication, namely step S106: judging whether U-KEY is legitimate; the authentication here means that the server will get the clear information by making the decryption on the first authentication data received and compare whether the clear information are consistent with the first data to be authenticated on the server. If yes, U-KEY will pass the authentication on the server and be recognized by the server, namely U-KEY will obtain the authority to get the information from the server and send the information to the server. The operator certificate sent here includes the public key that can decrypt the first authentication data, so as to guarantee that it may extract the public key in the operator key after being received on the server and then decrypt the first authentication data. For example, if the first data to be authenticated is D1, the operator private key S will be used to make encryption on it and generate the first authentication data; if the first data to be authenticated is D2, the public key corresponding to the operator private key will be G, and the attack cleanup tool will send D2 and the certificate containing G to the server, and the server will extract G from the certificate and use G to decrypt D2, get the clear information of D2, and compare whether the clear information of D1 and D2 are consistent. If yes, U-KEY will pass the authentication on the server; if no, U-KEY will not pass the authentication on the server.

After the server confirms that the U-KEY is valid, it will enter into step S107: getting the second data to be authenticated. The step is detailed as follows:
The client tool will get the second data to be authenticated from the terminal; similarly, the terminal will generate the second data to be authenticated. In this embodiment, the second data to be authenticated is the combination of the terminal serial number, mainboard feature code and random number. The terminal serial number and mainboard feature code here are unique and they are unique identification of the unique terminal.

In this embodiment, the random number is a 16-digit random number. In other embodiments, the random number may be letters or characters in other digits. The combination of the terminal serial number, mainboard feature code and random number with unique identification terminal guarantees the uniqueness of the second data to be authenticated.

After the terminal generates the second data to be authenticated, the client tool will get the second data to be authenticated.

After the client tool gets the second data to be authenticated, it will send the said second data to be authenticated to the server. The server will authenticate the second data to be authenticated and judge whether the terminal equipment information is legitimate. If yes, the server will use the first private key Pr1 to make encryption on the second data to be authenticated and generate the second authentication data.

In this embodiment, for the sake of high safety requirement, as the public key used by every terminal is different, when the server judges the terminal information, it will not merely judge its legality, but also use the private key corresponding to the terminal to make encryption on the data to be authenticated on the basis of this terminal information. Through encrypting the data to be authenticated by using the private key, it is ensured that the authentication data generated will neither be intercepted by other lawbreakers during data transmission, and the truly legitimate server will not be imitated so as to cause any safety problem.

While in some other embodiments, for the sake of convenience and universality, the public key used by every terminal is the same. Thus the server will only need to judge the legality of the terminal information, and will use the general private key to make encryption on the data to be authenticated.

Step S108: Returning to the second authentication data. This step is detailed as follows: The server will send the second authentication data to the terminal through the client tool, and the terminal will make the authentication, namely step S109: Judging whether the second authentication data are passed. The step is detailed as follows: The terminal will use the first public key Pul preset in step S102 to make decryption on the second authentication data, get the clear information of the second authentication data, and compare whether the clear information of the second authentication data are consistent with the clear information of the second data to be authenticated. If yes, they will pass the authentication.

If they pass the authentication, this means that the server will also pass the authentication of the terminal. Then the holder of U-KEY who is recognized on the server will have the authority to use the client tool to send the instruction of getting the attack alarm information log (namely step S110). The said instruction shall at least include: Operate as per the instruction of getting the attack alarm information log from the terminal and avoid illegitimate operations. In addition, in order to guarantee the safety of the attack alarm information log during transmission, in step S111, the attack alarm information log will be encrypted. The terminal here will use the second public key Pu2 present to make encryption on the attack alarm information log. After that, the terminal will send the said attack alarm information log to the client tool.

Step S112: Decrypting the attack alarm information log and getting the corresponding clear information. The client tool will receive the said attack alarm information log, use the present second private key Pr2 to make decryption on the attack alarm information log, and get the clear information. After U-KEY passes the server authentication, the subsequent steps all can be completed automatically, which greatly improves the speed of getting the attack alarm information log.

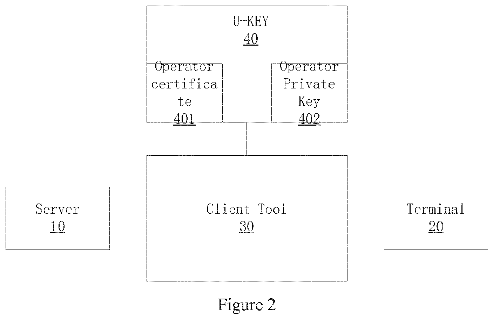

Please refer to Figure 2. In some embodiments, the scheme of a system for authorization to get terminal attack alarm information log (this invention) is as follows:
The system includes: Server 10, Terminal 20 and Client Tool 30. U-KEY40 is inserted on Client Tool 30. In this embodiment, the Client Tool 30 is PC. In U-KEY40, the Operator Certificate 401 and Operator Private Key 402 are stored. After U-KEY40 is inserted on Client Tool 30, as the interactive software is installed on Client Tool 30, the Client Tool 30 can get the Operator Certificate 401 and Operator Private Key 402 through the interactive software.

The details are as follows:
Server 10 is used for generating the first public-private key pair Pr1 and Pu1 and the second public-private key pair Pr2 and Pu2, and sending the first public key Pu1 and the second public key Pu2 to Terminal 20. Meanwhile, when U-KEY40 is issued, the second private key Pr2 will be stored from Server 10 to U-KEY40.

Client Tool 30 is used for getting the second private key Pr2 through the installed interactive software from U-KEY40.

In this embodiment, the specific APP is installed on Client Tool 30. In APP login interface, the maintenance personnel must input the account and password to log into the system.

Server 10 stores all valid accounts and passwords, including the corresponding authority of these accounts. The maintenance personnel will enter the account and password, and Server 10 will get the account and password entered by the maintenance personnel and judge whether such account and password are stored in Server 10. If they are stored in Server 10, the maintenance personnel will successfully logon to the system. At the same time, Server 10 will further get the authority of such account, and judge whether such account has the authority to get the attack alarm information log. Through the authority authentication by Server 10 for the account and password, the validity of subsequent operation will be ensured.

After verifying that the account has the authority to get the attack alarm information log, Server 10 will authenticate the validity of U-KEY40used by operator. The details are as follows:
Client Tool 30 will get the first data to be authenticated from Server 10; at first, Server 10 will generate the first data to be authenticated. In this embodiment, the first data to be authenticated are 16-digit random number. Client Tool 30 will get the first data to be authenticated from Server 10.

Client Tool 30 will use U-KEY to generate the first authentication data; after receiving the first data to be authenticated, Client Tool 30 will use the Operator Private Key 402 stored in U-KEY to encrypt the first data to be authenticated. After encryption, the first authentication data will be generated. Through the Operator Private Key 402 stored in U-KEY, the first data to be authenticated will be encrypted, which ensures that the generated first authentication data will not be intercepted by other unauthorized U-KEY40 during the data transmission process and prevents the security issue due to copycat of really authorized U-KEY40.

After the first authentication data are generated, Client Tool 30 will send the first authentication data and Operator Certificate 401 to Server 10 for authentication. Such authentication refers to "Server 10 gets the plain text by decrypting the received first authentication data, and compares whether such plain text is the same as the first data to be authenticated of Server 10". If they are the same, U-KEY40 will pass the authentication by Server 10 and get the approval from Server 10. In other words, U-KEY40 will get the authority to get information from and send information to Server 10.

After Server 10 confirms the validity of U-KEY40, Client Tool 30 will get the second data to be authenticated from Terminal 20. Likewise, Terminal 20 will generate the second data to be authenticated. In this embodiment, the second data to be authenticated are the combination of the terminal serial number, mainboard feature code and random number. Such terminal serial number and mainboard feature code are unique and they can uniquely identify a Terminal 20. Through using the combination of terminal serial number and mainboard feature code with unique identification terminal, and random number, the uniqueness of the second data to be authenticated is ensured.

After Terminal 20 generates the second data to be authenticated, Client Tool 30 will get the second data to be authenticated.

After getting the second data to be authenticated, Client Tool 30 will sendthe said second data to be authenticated and terminal information to Server 10. Server 10 will judge whether the terminal equipment information is valid by authenticating the second data to be authenticated. If such information is valid, Server 10 will use the first authentication private key Pr1 to encrypt the second data to be authenticated, which generates the second authentication data.

Through Client Tool 30, Server 10 will send the second authentication data to Terminal 20 for authentication. The details are as follows: Terminal 20 will use the preset first public key Pu1 to decrypt the second authentication data, get the plain text of the second authentication data, and compare whether the plain text of the said second authentication data are consistent with the second data to be authenticated. If they are consistent, the authentication will be passed.

If the authentication is passed, it means that Server 10 will also pass the authentication of Terminal 20. Then, the holder of U-KEY40 passing the recognition of Server 10 will have the authority to send the instruction of getting the attack alarm information log to Terminal 20 through Client Tool 30. The said instruction shall at least include: operate as per the instruction of getting the attack alarm information log from Terminal 20 and avoid illegitimate operations. In addition, in order to guarantee the safety of the attack alarm information log during transmission, Terminal 20 will also be used for encrypting the attack alarm information log by the preset second public key Pu2, and sending the said attack alarm information log to Client Tool 30 after encryption.

Client Tool 30 is also used for receiving the said attack alarm information log, and decrypting the attack alarm information log by the preset second private key Pr2 and getting the plain text. After U-KEY40 passes the Server 10 authentication, the subsequent steps all can be completed automatically, which greatly improves the speed of getting the attack alarm information log.

In all embodiments of the Invention, if the authentication is invalid or the account has no corresponding permission, the method will be ended in advance, and the data stream in the system will not flow to the next module.

It should be noted that the relational terms herein such as first and second are used only to differentiate an entity or operation from another entity or operation, and do not require or imply any actual relationship or sequence between these entities or operations. In addition, term "comprise", "include", or any other variant thereof aims to cover non-exclusive "include", so that a process, method, object, or terminal device that comprises a series of elements not only comprises the elements, but also comprises other elements that are not definitely listed, or further comprises inherent elements of the process, method, object, or terminal device. In a case in which there are no more limitations, an element defined by the sentence "comprise..." or "include..." does not exclude the case in which other elements further exist in a process, method, or object, or terminal device that comprises the element. In addition, in this text, "greater than", "less than", "exceed", and the like are understood as not including the number. "More", "fewer", "within", and the like are understood as including the number.

A person skilled in the art should understand that the foregoing embodiments may provide a method, an apparatus, a device, or a computer program product. These embodiments may use forms of full hardware embodiments, full software embodiments, or embodiments of a combination of software and hardware aspects. All or some of the steps in the methods involved in the foregoing embodiments may be implemented by using a program instructing relevant hardware. The program may be stored in a computer device readable storage medium for performing all or some of the steps of the methods in the foregoing embodiments. The computer device includes but is not limited to: a personal computer, a server, a general-purpose computer, a dedicated computer, a network device, an embedded device, a programmable device, an intelligent mobile terminal, an intelligent home device, a wearable intelligent device, an in-vehicle intelligent device, and the like. The storage medium includes but is not limited to: a RAM, a ROM, a magnetic disk, a magnetic tape, an optical disc, a flash memory, a USB flash drive, a removable hard disk, a memory card, a memory stick, network server storage, network cloud storage, and the like.

The foregoing embodiments are described with reference to flowcharts and/or block diagrams of the method, the device (the system), and the computer program product in the embodiments. It should be understood that computer program instructions may be used for implementing each process and/or each block in the flowcharts and/or the block diagrams and a combination of a process and/or a block in the flowcharts and/or the block diagrams. These computer program instructions may be provided to a computer of a computer device to generate a machine, so that instructions executed by the processor of the computer device generate an apparatus configured to implement specific functions in one or more processes in the flowcharts and/or in one or more blocks in the block diagrams.

These computer program instructions may further be stored in a computer device readable memory that can instruct the computer device to work in a specific manner, so that the instructions stored in the computer device readable memory generate an artifact that includes an instruction apparatus. The instruction apparatus implements specific functions in one or more processes in the flowcharts and/or in one or more blocks in the block diagrams.

These computer program instructions may further be loaded onto a computer device, so that a series of operations and steps are performed on the computer device, thereby generating computer-implemented processing. Therefore, the instructions executed on the computer device provide steps for implementing specific functions in one or more processes in the flowcharts and/or in one or more blocks in the block diagrams.

Although the foregoing embodiments are described, once a person skilled in the art learns a basic inventive concept, the person skilled in the art may make additional changes and modifications to these embodiments. Therefore, the foregoing descriptions are merely embodiments of the present invention, and are not intended to limit the patent protection scope of the present invention. The scope of protection sought is defined by the appended claims.

## Claims

1. A method for securely retrieving an attack alarm information log from a terminal (20), comprising:
sending, by a client tool (30), account and login information to a server (10),
in response to receiving the account and login information, determining, by the server (10), whether the account has authority to receive the attack alarm information log, and if it is determined that the account has authority, sending first data to be authenticated to a client tool (30),
in response to receiving the first data to be authenticated, retrieving, by the client tool (30), an operator certificate (401) from a U-KEY (40), whereby the U-key (40) is a removable device that is inserted in the client tool (30), and the U-KEY (40) includes an operator private key (402) which can be directly used by the client tool, using the operator private key (402) to encrypt the first data to be authenticated, generating the first authentication data, and sending the operator certificate (401) and the first authentication data to the server (10),
in response to receiving the operator certificate (401) and the first authentication data, authenticating, by the server (10), the first authentication data,
in response to authenticating the first authentication data, sending, by the terminal (20), second data to be authenticated to the client tool (30),
in response to receiving the second data to be authenticated, sending, by the client tool (30), the second data to be authenticated to the server (10),
in response to receiving the second data to be authenticated, authenticating, by the server (10), the second data to be authenticated, and if the second data to be authenticated are authenticated, using a first private key to encrypt the second data to be authenticated, generating second authentication data, and sending the second authentication data to the terminal (20) via the client tool (30),
in response to receiving the second authentication data, using, by the terminal (20), a first public key to authenticate the second authentication data,
if the second authentication data are authenticated, sending, by the client tool (30), instructions to the terminal (20),
in response to receiving the instructions, using, by the terminal (20) a second public key to encrypt the attack alarm information log and sending the attack alarm information log to the client tool (30),
in response to receiving the attack alarm information log, using, by the client tool (30), a second private key to decrypt the attack alarm information log and retrieving clear information of the attack alarm information log.

2. The method according to claim 1, further comprising:
generating, by the server (10), a first public-private key pair and a second public-private key pair, wherein the said first public-private key pair includes the first public key and the first private key, and wherein the second public-private key pair includes the second public key and the second private key, storing the first private key, sending the -,m4 first public key and the second public key to the terminal (20), and sending the said second private key to U-KEY (40);
receiving, by the terminal (20) , the said first public key and the said second public key and storing the first public key and second public key.

3. The method according to claim 2, wherein using by the terminal (20), a first public key to authenticate the second authentication data, comprises: using, by the terminal (20) the first public key to decrypt the authentication data, and determining whether the result and the second data to be authenticated are consistent; and if they are consistent, authenticating the second authentication data.

4. The method according to claim 2, wherein using, by the client tool (30), a second private key to decrypt the attack alarm information log, comprises:
retrieving, by the client tool (30), the second private key from U-KEY (40).

5. The method according to claim 1, wherein authenticating, by the server (10), the first authentication data comprises:
extracting, by the server, the public key from the operator certificate, using the said public key to decrypt the first authentication data, determining whether the result and the first data to be authenticated are consistent, and if they are consistent, authenticate the first authentication data.

6. A system for securely retrieving an attack alarm information log from a terminal (20), comprising a server (10), a terminal (20) and a client tool (30), wherein the server (10) is adapted
to determine, in response to receiving account and login information from the client tool (30), whether the account has authority to receive an attack alarm information log, and if it determines that the account has authority, to send a first data to be authenticated to the client tool (30),
to authenticate, in response to receiving the operator certificate (401) and the first authentication data from the client tool (30), the first authentication data,
to authenticate, in response to receiving the second data to be authenticated from the client tool, the second data to be authenticated, and if the second data to be authenticated are authenticated, using a first private key to encrypt the second data to be authenticated, generating second authentication data, and sending the second authentication data to the terminal (20) via the client tool (30);
wherein the terminal (20) is adapted
to send, in response to authenticating the first authentication data by the server (10), second data to be authenticated to the client tool (30),
to use, in response to receiving the second authentication data, a first public key to authenticate the second authentication data,
to use, in response to receiving instructions, a second public key to encrypt the attack alarm information log and to send the attack alarm information log to the client tool (30);
wherein the client tool (30) is adapted
to send account and login information to a server (10),
to retrieve, in response to receiving the first data to be authenticated, an operator certificate (401) from a U-KEY (40), whereby the U-key (40) is a removable device that is inserted in the client tool (30), and the U-KEY (40) includes an operator private key (402) which can be directly used by the client tool,
to use the operator private key (402) to encrypt the first data to be authenticated, to generate the first authentication data, and to send the operator certificate (401) and the first authentication data to the server (10),
to send, in response to receiving the second data to be authenticated, the second data to be authenticated to the server (10),
to send, if the second authentication data are authenticated, the instructions to the terminal (20),
to use, in response to receiving the attack alarm information log, a second private key to decrypt the attack alarm information log and to retrieve clear information of the attack alarm information log.

7. The system according to claim 6, wherein
the said server (10) is adapted to generate a first public-private key pair and a second public-private key pair, whereby the first public-private key pair includes the first public key and the first private key, and the second public-private key pair includes the second public key and the second private key to store the first private key, to send the first public key and the second public key to the terminal (20), and to send the second private key to U-KEY (40);
and wherein the terminal (20) is adapted to receive the first public key and the second public key.

8. The system according to claim 7 wherein the terminal (20), in order to authenticate the second authentication data, is adapted to use the first public key to decrypt the second authentication data, to determine whether the result and the second data to be authenticated are consistent; and if they are consistent, to authenticate the second authentication data.

9. The system according to claim 7 wherein the client tool (30), in order to decrypt the attack alarm information, is adapted to retrieve the second private key from U-KEY (40).

10. The system according to claim 6 wherein the server (10), in order to authenticate the first authentication data, is adapted to extract the public key from the operator certificate, to use the public key to decrypt the first authentication data, to determine whether the result and the first data to be authenticated are consistent; and if they are consistent, to authenticate the first authentication data.

## Patentansprüche

1. Verfahren zum sicheren Abrufen eines Angriffsalarm-Informationsprotokolls von einem Endgerät (20), umfassend:
Senden, durch ein Client-Tool (30), von Konto- und Anmeldeinformationen an einen Server (10),
als Reaktion auf den Empfang der Konto- und Anmeldeinformationen, Bestimmen durch den Server (10), ob das Konto die Berechtigung hat, das Angriffsalarm-Informationsprotokoll zu empfangen, und wenn bestimmt wird, dass das Konto die Berechtigung hat, Senden von ersten zu authentifizierenden Daten an ein Client-Tool (30),
als Reaktion auf den Empfang der ersten zu authentifizierenden Daten, Abrufen, durch das Client-Tool (30), eines Betreiberzertifikats (401) von einem U-KEY (40), wobei der U-KEY (40) eine herausnehmbare Vorrichtung ist, die in das Client-Tool (30) eingesetzt ist, und der U-KEY (40) einen privaten Betreiberschlüssel (402) enthält, der direkt von dem Client-Tool verwendet werden kann, Verwenden des privaten Betreiberschlüssels (402), um die ersten zu authentifizierenden Daten zu verschlüsseln, Erzeugen der ersten Authentifizierungsdaten und Senden des Betreiberzertifikats (401) und der ersten Authentifizierungsdaten an den Server (10),
in Reaktion auf den Empfang des Betreiberzertifikats (401) und der ersten Authentifizierungsdaten, Authentifizieren, durch den Server (10), der ersten Authentifizierungsdaten,
als Reaktion auf die Authentifizierung der ersten Authentifizierungsdaten, Senden, durch das Endgerät (20), von zweiten zu authentifizierenden Daten an das Client-Tool (30),
als Reaktion auf den Empfang der zweiten zu authentifizierenden Daten, Senden, durch das Client-Tool (30), der zweiten zu authentifizierenden Daten an den Server (10),
als Reaktion auf den Empfang der zweiten zu authentifizierenden Daten, Authentifizieren, durch den Server (10), der zweiten zu authentifizierenden Daten und wenn die zweiten zu authentifizierenden Daten authentifiziert sind, Verwenden eines ersten privaten Schlüssels, um die zweiten zu authentifizierenden Daten zu verschlüsseln, Erzeugen zweiter Authentifizierungsdaten und Senden der zweiten Authentifizierungsdaten an das Endgerät (20) über das Client-Tool (30),
als Reaktion auf den Empfang der zweiten Authentifizierungsdaten, Verwenden, durch das Endgerät (20), eines ersten öffentlichen Schlüssels zur Authentifizierung der zweiten Authentifizierungsdaten,
wenn die zweiten Authentifizierungsdaten authentifiziert sind, Senden, durch das Client-Tool (30), von Anweisungen an das Endgerät (20),
als Reaktion auf den Empfang der Anweisungen, Verwenden, durch das Endgerät (20), eines zweiten öffentlichen Schlüssels, um das Angriffsalarm-Informationsprotokoll zu verschlüsseln, und Senden des Angriffsalarm-Informationsprotokolls an das Client-Tool (30),
als Reaktion auf den Empfang des Angriffsalarm-Informationsprotokolls, Verwenden, durch das Client-Tool (30), eines zweiten privaten Schlüssels zum Entschlüsseln des Angriffsalarm-Informationsprotokolls und Abrufen von eindeutigen Informationen des Angriffsalarm-Informationsprotokolls.

2. Verfahren nach Anspruch 1, ferner umfassend:
Erzeugen, durch den Server (10), eines ersten öffentlich-privaten Schlüsselpaares und eines zweiten öffentlich-privaten Schlüsselpaares, wobei das erste öffentlich-private Schlüsselpaar den ersten öffentlichen Schlüssel und den ersten privaten Schlüssel enthält, und wobei das zweite öffentlich-private Schlüsselpaar den zweiten öffentlichen Schlüssel und den zweiten privaten Schlüssel enthält, Speichern des ersten privaten Schlüssels, Senden des ersten öffentlichen Schlüssels und des zweiten öffentlichen Schlüssels an das Endgerät (20), und Senden des zweiten privaten Schlüssels an U-KEY (40);
Empfangen, durch das Endgerät (20), des genannten ersten öffentlichen Schlüssels und des genannten zweiten öffentlichen Schlüssels und Speichern des ersten öffentlichen Schlüssels und des zweiten öffentlichen Schlüssels.

3. Verfahren nach Anspruch 2, wobei das Verwenden eines ersten öffentlichen Schlüssels durch das Endgerät (20) zur Authentifizierung der zweiten Authentifizierungsdaten Folgendes umfasst: Verwenden, durch das Endgerät (20), des ersten öffentlichen Schlüssels zur Entschlüsselung der Authentifizierungsdaten und Bestimmen, ob das Ergebnis und die zweiten zu authentifizierenden Daten konsistent sind; und wenn sie konsistent sind, Authentifizierung der zweiten Authentifizierungsdaten.

4. Verfahren nach Anspruch 2, wobei die Verwendung eines zweiten privaten Schlüssels durch das Client-Tool (30) zum Entschlüsseln des Angriffsalarm-Informationsprotokolls umfasst:
Abrufen, durch das Client-Tool (30), des zweiten privaten Schlüssels von U-KEY (40).

5. Verfahren nach Anspruch 1, wobei das Authentifizieren der ersten Authentifizierungsdaten durch den Server (10) Folgendes umfasst:
Extrahieren, durch den Server, des öffentlichen Schlüssels aus dem Betreiberzertifikat, Verwenden des öffentlichen Schlüssels zum Entschlüsseln der ersten Authentifizierungsdaten, Bestimmen, ob das Ergebnis und die ersten zu authentifizierenden Daten konsistent sind, und wenn sie konsistent sind, Authentifizieren der ersten Authentifizierungsdaten.

6. System zum sicheren Abrufen eines Angriffsalarm-Informationsprotokolls von einem Endgerät (20), das einen Server (10), ein Endgerät (20) und ein Client-Tool (30) umfasst, wobei der Server (10) eingerichtet ist,
zu bestimmen, als Reaktion auf den Empfang von Konto- und Anmeldeinformationen von dem Client-Tool (30), ob das Konto die Berechtigung hat, ein Angriffsalarm-Informationsprotokoll zu empfangen, und wenn er bestimmt, dass das Konto die Berechtigung hat, erste zu authentifizierende Daten an das Client-Tool (30) zu senden,
die ersten Authentifizierungsdaten zu authentifizieren, als Reaktion auf den Empfang des Betreiberzertifikats (401) und der ersten Authentifizierungsdaten von dem Client-Tool (30),
die zweiten zu authentifizierenden Daten zu authentifizieren, als Reaktion auf den Empfang der zweiten zu authentifizierenden Daten von dem Client-Tool, und wenn die zweiten zu authentifizierenden Daten authentifiziert sind, einen ersten privaten Schlüssel zu verwenden, um die zweiten zu authentifizierenden Daten zu verschlüsseln, zweite Authentifizierungsdaten zu erzeugen und die zweiten Authentifizierungsdaten über das Client-Tool (30) an das Endgerät (20) zu senden;
wobei das Endgerät (20) eingerichtet ist
zweite zu authentifizierende Daten an das Client-Tool (30) zu senden, als Reaktion auf die Authentifizierung der ersten Authentifizierungsdaten durch den Server (10),
einen ersten öffentlichen Schlüssel zu verwenden, als Reaktion auf den Empfang der zweiten Authentifizierungsdaten, um die zweiten Authentifizierungsdaten zu authentifizieren,
einen zweiten öffentlichen Schlüssel zu verwenden, als Reaktion auf den Empfang von Anweisungen, um das Angriffsalarm-Informationsprotokoll zu verschlüsseln und das Angriffsalarm-Informationsprotokoll an das Client-Tool (30) zu senden;
wobei das Client-Tool (30) eingerichtet ist
Konto- und Anmeldeinformationen an einen Server (10) zu senden,
ein Betreiberzertifikat (401) von einem U-KEY (40) abzurufen, als Reaktion auf den Empfang der ersten zu authentifizierenden Daten, wobei der U-KEY (40) eine herausnehmbare Vorrichtung ist, die in das Client-Tool (30) eingesetzt ist, und der U-KEY (40) einen privaten Betreiberschlüssel (402) enthält, der direkt von dem Client-Tool verwendet werden kann,
den privaten Bedienerschlüssel (402) zu verwenden, um die ersten zu authentifizierenden Daten zu verschlüsseln,
die ersten Authentifizierungsdaten zu erzeugen und das Betreiberzertifikat (401) und die ersten Authentifizierungsdaten an den Server (10) zu senden,
die zweiten zu authentifizierenden Daten an den Server (10) zu senden, als Reaktion auf den Empfang der zweiten zu authentifizierenden Daten,
die Anweisungen an das Endgerät (20) zu senden, wenn die zweiten Authentifizierungsdaten authentifiziert sind,
einen zweiten privaten Schlüssel zu verwenden, als Reaktion auf den Empfang des Angriffsalarm-Informationsprotokolls, um das Angriffsalarm-Informationsprotokoll zu entschlüsseln und klare Informationen des Angriffsalarm-Informationsprotokolls abzurufen.

7. Das System nach Anspruch 6, wobei
der Server (10) eingerichtet ist, ein erstes öffentlich-privates Schlüsselpaar und ein zweites öffentlich-privates Schlüsselpaar zu erzeugen, wobei das erste öffentlich-private Schlüsselpaar den ersten öffentlichen Schlüssel und den ersten privaten Schlüssel enthält und das zweite öffentlich-private Schlüsselpaar den zweiten öffentlichen Schlüssel und den zweiten privaten Schlüssel enthält, um den ersten privaten Schlüssel zu speichern, um den ersten öffentlichen Schlüssel und den zweiten öffentlichen Schlüssel an das Endgerät (20) zu senden und um den zweiten privaten Schlüssel an U-KEY (40) zu senden;
und wobei das Endgerät (20) eingerichtet ist, den ersten öffentlichen Schlüssel und den zweiten öffentlichen Schlüssel zu empfangen.

8. System nach Anspruch 7, wobei
das Endgerät (20), um die zweiten Authentifizierungsdaten zu authentifizieren, eingerichtet ist, den ersten öffentlichen Schlüssel zu verwenden, um die zweiten Authentifizierungsdaten zu entschlüsseln, um zu bestimmen, ob das Ergebnis und die zweiten zu authentifizierenden Daten konsistent sind; und wenn sie konsistent sind, die zweiten Authentifizierungsdaten zu authentifizieren.

9. System nach Anspruch 7, bei dem das Client-Tool (30) zum Entschlüsseln der Angriffsalarm-Informationen eingerichtet ist, den zweiten privaten Schlüssel von U-KEY (40) abzurufen.

10. System nach Anspruch 6, wobei der Server (10), um die ersten Authentifizierungsdaten zu authentifizieren, eingerichtet ist, den öffentlichen Schlüssel aus dem Betreiberzertifikat zu extrahieren, den öffentlichen Schlüssel zu verwenden, um die ersten Authentifizierungsdaten zu entschlüsseln, um festzustellen, ob das Ergebnis und die ersten zu authentifizierenden Daten konsistent sind; und wenn sie konsistent sind, die ersten Authentifizierungsdaten zu authentifizieren.

## Revendications

1. Un procédé de récupération sécurisée d'un journal d'informations d'alarme d'attaque à partir d'un terminal (20), comprenant :
le fait, par un outil client (30), d'envoyer des informations de compte et de connexion à un serveur (10),
en réponse à la réception des informations de compte et de connexion, le fait, par le serveur (10), de déterminer si le compte a l'autorité pour recevoir le journal d'informations d'alarme d'attaque, et s'il est déterminé que le compte a l'autorité, envoyer à un outil client (30) des premières données devant être authentifiées,
en réponse à la réception des premières données à authentifier, le fait, par l'outil client (30), d'extraire un certificat d'opérateur (401) à partir d'une U-KEY (40), la U-key (40) étant un dispositif amovible qui est insérée dans l'outil client (30), et la U-KEY (40) comprend une clé privée d'opérateur (402) qui est apte à être directement utilisée par l'outil client, utilisant la clé privée d'opérateur (402) pour chiffrer les premières données à authentifié, générer les premières données d'authentification, et envoyer le certificat d'opérateur (401) et les premières données d'authentification au serveur (10),
en réponse à la réception du certificat d'opérateur (401) et des premières données d'authentification, le fait, par le serveur (10), d'authentifier les premières données d'authentification,
en réponse à l'authentification des premières données d'authentification, le fait, par le terminal (20), d'envoyer des deuxièmes données à authentifier à l'outil client (30),
en réponse à la réception des deuxièmes données à authentifier, le fait, par l'outil client (30), d'envoyer les deuxièmes données à authentifier au serveur (10),
en réponse à la réception des deuxièmes données à authentifier, le fait, par le serveur (10), d'authentifier les deuxièmes données à authentifier, et si les deuxièmes données à authentifier sont authentifiées, le fait d'utiliser une première clé privée pour chiffrer les deuxièmes données à authentifier, de générer des deuxièmes données d'authentification, et d'envoyer les deuxièmes données d'authentification au terminal (20) via l'outil client (30),
en réponse à la réception des deuxièmes données d'authentification, le fait, par le terminal (20), d'utiliser une première clé publique pour authentifier les deuxièmes données d'authentification,
si les deuxièmes données d'authentification sont authentifiées, le fait, par l'outil client (30), d'envoyer des instructions au terminal (20),
en réponse à la réception des instructions, le fait, par le terminal (20), d'utiliser une deuxième clé publique pour chiffrer le journal d'informations d'alarme d'attaque et d'envoyer le journal d'informations d'alarme d'attaque à l'outil client (30),
en réponse à la réception du journal d'informations d'alarme d'attaque, le fait, par l'outil client (30), d'utiliser une deuxième clé privée pour déchiffrer le journal d'informations d'alarme d'attaque et d'extraire des informations en clair du journal d'informations d'alarme d'attaque.

2. Le procédé selon la revendication 1, comprenant en outre :
le fait, par le serveur (10), de générer une première paire de clés publique-privée et une deuxième paire de clés publique-privée, ladite première paire de clés publique-privée comprenant la première clé publique et la première clé privée, et la deuxième paire de clés publique-privée comprenant la deuxième clé publique et la deuxième clé privée, le fait de mémoriser la première clé privée, d'envoyer la première clé publique et la deuxième clé publique au terminal (20), et d'envoyer ladite deuxième clé privée à la U-KEY (40) ;
le fait, par le terminal (20), de recevoir ladite première clé publique et ladite deuxième clé publique et de mémoriser la première clé publique et la deuxième clé publique.

3. Le procédé selon la revendication 2, dans lequel l'utilisation par le terminal (20), d'une première clé publique pour authentifier les deuxièmes données d'authentification, comprend : le fait, par le terminal (20), d'utiliser la première clé publique pour déchiffrer les données d'authentification, et de déterminer si le résultat et les deuxièmes données à authentifier sont cohérents ; et, s'ils sont cohérents, le fait d'authentifier les deuxièmes données d'authentification.

4. Le procédé selon la revendication 2, dans lequel le fait, par l'outil client (30), d'utiliser une deuxième clé privée pour déchiffrer le journal d'informations d'alarme d'attaque, comprend :
le fait, par l'outil client (30), d'extraire la deuxième clé privée de la U-KEY (40).

5. Le procédé selon l'une quelconque des revendications précédentes, dans lequel l'authentification, par le serveur (10), des premières données d'authentification comprend :
le fait, par le serveur, d'extraire la clé publique du certificat d'opérateur, d'utiliser ladite clé publique pour déchiffrer les premières données d'authentification, de déterminer si le résultat et les premières données à authentifier sont cohérents, et s'ils sont cohérents, d'authentifier les premières données d'authentification.

6. Un système de récupération sécurisée d'un journal d'informations d'alarme d'attaque à partir d'un terminal (20), comprenant un serveur (10), un terminal (20) et un outil client (30), le serveur (10) étant adapté
pour déterminer, en réponse à la réception d'informations de compte et de connexion de l'outil client (30), si le compte a l'autorité pour recevoir un journal d'informations d'alarme d'attaque, et, s'il détermine que le compte a l'autorité, pour envoyer à l'outil client (30) des premières données à authentifier,
pour authentifier, en réponse à la réception du certificat d'opérateur (401) et des premières données d'authentification en provenance de l'outil client (30), les premières données d'authentification,
pour authentifier, en réponse à la réception des deuxièmes données à authentifier provenant de l'outil client, les deuxièmes données à authentifier, et si les deuxièmes données à authentifier sont authentifiées, pour utiliser une première clé privée pour chiffrer les deuxièmes données à authentifier, générer des deuxièmes données d'authentification, et envoyer les deuxièmes données d'authentification au terminal (20) via l'outil client (30) ;
le terminal (20) étant adapté pour
envoyer à l'outil client (30), en réponse à l'authentification des premières données d'authentification par le serveur (10), des deuxièmes données à authentifier,
utiliser, en réponse à la réception des deuxièmes données d'authentification, une première clé publique afin d'authentifier les deuxièmes données d'authentification,
utiliser, en réponse à des instructions de réception, une deuxième clé publique afin de chiffrer le journal d'informations d'alarme d'attaque et pour envoyer le journal d'informations d'alarme d'attaque à l'outil client (30) ;
l'outil client (30) étant adapté pour
envoyer des informations de compte et de connexion à un serveur (10),
extraire, en réponse à la réception des premières données à authentifier, un certificat d'opérateur (401) à partir d'une U-KEY (40), la U-key (40) étant un dispositif amovible qui est insérée dans l'outil client (30), et l'U-KEY (40) comprenant une clé privée d'opérateur (402) qui est apte à être directement utilisée par l'outil client,
utiliser la clé privée d'opérateur (402) pour chiffrer les premières données à authentifier,
générer les premières données d'authentification, et envoyer au serveur (10) le certificat d'opérateur (401) et les premières données d'authentification,
envoyer au serveur (10), en réponse à la réception des deuxièmes données à authentifier, les deuxièmes données à authentifier,
envoyer, si les deuxièmes données d'authentification sont authentifiées, les instructions au terminal (20),
utiliser, en réponse à la réception du journal d'informations d'alarme d'attaque, une deuxième clé privée pour déchiffrer le journal d'informations d'alarme d'attaque et pour extraire des informations en clair du journal d'informations d'alarme d'attaque.

7. Le système selon la revendication 6, dans lequel
ledit serveur (10) est adapté pour générer une première paire de clés publique-privée et une deuxième paire de clés publique-privée, la première paire de clés publique-privée comprenant la première clé publique et la première clé privée, et la deuxième paire de clés publique-privée comprenant la deuxième clé publique et la deuxième clé privée pour stocker la première clé privée, pour envoyer la première clé publique et la deuxième clé publique au terminal (20), et pour envoyer la deuxième clé privée à la U-KEY (40) ; et
le terminal (20) étant adapté pour recevoir la première clé publique et la deuxième clé publique.

8. Le système selon la revendication 7, dans lequel le terminal (20), afin d'authentifier les deuxièmes données d'authentification, est adapté pour utiliser la première clé publique afin de déchiffrer les deuxièmes données d'authentification, de façon à déterminer si le résultat et les deuxièmes données à authentifier sont cohérents ; et, s'ils sont cohérents, pour authentifier les deuxièmes données d'authentification.

9. Le système selon la revendication 7, dans lequel l'outil client (30), afin de décrypter les informations d'alarme d'attaque, est adapté pour extraire la deuxième clé privée de la U-KEY (40).

10. Le système selon la revendication 6, dans lequel le serveur (10), afin d'authentifier les premières données d'authentification, est adapté pour extraire la clé publique du certificat d'opérateur, pour utiliser la clé publique afin de décrypter les premières données d'authentification, de façon à déterminer si le résultat et les premières données à authentifier sont cohérents ; et, s'ils sont cohérents, pour authentifier les premières données d'authentification.
